# EUROPÄISCHE PATENTANMELDUNG

(11) **EP 1 205 789 A2**
(43) Veröffentlichungstag der Anmeldung: **15.05.2002**
(21) Anmeldenummer: 01121056.4
(22) Anmeldetag: 03.09.2001
(51) Int. Cl.: G03B 7/091

(54) **Steuerung für ein elektronisches Gerät zum Empfang elektromagnetischer Wellen, insbesondere Licht**

(30) Priorität: 09.09.2000 DE 10044746
(71) Anmelder: Basler Aktiengesellschaft, 22926 Ahrensburg (DE)
(72) Erfinder: Dierks, Friedrich, Dr., 22926 Ahrensburg (DE); Haider, Henning, 22844 Norderstedt (DE); Schollmeyer, Michael, 80803 München (DE); Gramatke, Martin, 22926 Ahrensburg (DE)
(74) Vertreter: Jaeschke, Rainer, Dipl.-Ing.

(57) **Zusammenfassung**

Die Erfindung betriftt eine Steuerung für ein elektronisches Gerät zum Empfang elektromagnetischer Wellen, insbesondere von Licht, das wenigstens einen lichtempfindlichen Sensor aufweist und aufgrund einer Belichtung Aufnahmedaten erzeugt sowie für wenigstens eine Aufnahme parametrisierbar ist, wobei die Aufnahmedaten nach der Belichtung an wenigstens eine Datenverarbeitungseinheit übertragbar sind. Gemäß der Erfindung ist vorgesehen, daß die Berechnung des frühestmöglichen Auslösezeitpunkts für die Belichtung wenigstens einer nachfolgenden Aufnahme anhand eines geräteinternen Zeitsignals und/oder eines geräteinternen Zeittaktes und der Parameter im Gerät selbst erfolgt.

## Beschreibung

Die Erfindung betrifft eine Steuerung für ein elektronisches Gerät zum Empfang elektromagnetischer Wellen, insbesondere von Licht, das wenigstens einen lichtempfindlichen Sensor aufweist und aufgrund einer Belichtung Aufnahmedaten erzeugt sowie für wenigstens eine Aufnahme parametrisierbar ist, wobei die Aufnahmedaten nach der Belichtung an wenigstens eine Datenverarbeitungseinheit übertragbar sind.

Solch ein elektronisches Gerät kann als elektronische Kamera, als optischer Meßsensor, Positionssensor, Triangulationssensor und dergleichen ausgebildet sein. Die Erfindung betrifft insbesondere die Steuerung von industriellen Kameras für Bildverarbeitungssysteme. Hier wird häufig das aufgenommene Bild in einer Datenverarbeitungsanlage ausgewertet und beispielsweise auf Fehler des aufgenommenen Gegenstands hin untersucht. Es wird im folgenden überwiegend von einer Kamera gesprochen, ohne daß damit eine Beschränkung verbunden sein soll.

Zur Steuerung einer solchen Kamera gehört unter anderem die Parametrisierung, die beispielsweise den gewünschten Bildausschnitt (Area of Interest), den sogenannten Binning-Modus, den Verstärkungsgrad und -offset sowie insbesondere die Belichtungsdauer, die sogenannte Integrationszeit, umfaßt. Grundsätzlich wird für jedes Bild eine separate Parametrisierung benötigt. Die Parameter sind jedoch in vielen Fällen gleich.

Mit den jeweils eingestellten Parametern erfolgt die Belichtung des lichtempfindlichen Sensors und somit die Aufnahme. Durch die Belichtung werden Aufnahmedaten erzeugt, die an die Datenverarbeitungseinheit übertragen werden, welche die Daten auswertet und eine Bilddarstellung oder Bildverarbeitung und dergleichen ermöglicht. Die Datenverarbeitungseinheit ist bei industriellen Bildverarbeitungssystemen in der Regel eine Datenverarbeitungsanlage oder ein Personal-Computer.

Wie im einzelnen die Übertragung der Aufnahmedaten erfolgt, hängt unter anderem von dem eingesetzten lichtempfindlichen Sensor ab. Häufig, beispielsweise bei CCD- oder CMOS-Sensoren, ist ein Transferregister vorhanden, in das die Aufnahmedaten nach der Belichtung geschoben werden. Aus diesem Transferregister gelangen die Daten zu der Datenverarbeitungseinheit. Hierzu wird eine bestimmte Zeit, die Transferzeit, benötigt, um die Aufnahmedaten übertragen zu können. Die mit der elektronischen Kamera zusammenwirkende Datenverarbeitungsanlage ist für den Datenaustausch in der Regel mit einem sogenannten Framegrabber ausgerüstet, der die Aufnahmedaten in verarbeitbare Signale umwandelt. Dieser Framegrabber dient häufig auch zur Steuerung und/oder Parametrisierung der Kamera.

Es sind demnach für eine Aufnahme mehrere Schritte erforderlich, nämlich insbesondere das Setzen der Parameter, das Belichten und anschließend der Datentransfer. Die Aufnahmefolgefrequenz wird daher im wesentlichen durch die dafür benötigten Zeiten, also die Zeit für die Parametrisierung, die Belichtungsdauer und die Datentransferzeit bestimmt. Wenn diese Schritte nacheinander durchgeführt werden, wird die maximal mögliche Aufnahmefolgefrequenz jedoch nicht immer erreicht. Je nach Art des Sensors kann die Belichtung bereits zu einem früheren Zeitpunkt durchgeführt werden. Zum Beispiel können typische CCD-Sensoren auch dann belichtet werden, während sich noch Daten im Transferregister befinden. Es ist hier aber erforderlich, daß die aktuellen Aufnahmedaten nach der Belichtung unmittelbar in das Transferregister geschoben werden, um eine Überbelichtung zu verhindern. Es muß hier sichergestellt werden, daß die Belichtung nicht vor dem Ende des Datentransfers der vorherigen Aufnahme endet, da ansonsten diese Daten überschrieben würden. Bei sogenannten FrameInterlineTransferSensoren tritt dieses Problem nicht auf. Hier muß sichergestellt werden, daß die Belichtungsdauer nicht vor dem Ende der Belichtungsdauer der vorhergehenden Aufnahme beginnt.

Grundsätzlich wäre es möglich, die Steuerung und insbesondere die Berechnung des frühestmöglichen Auslösezeitpunktes für eine maximale Aufnahmefolgefrequenz oder schnellstmögliche Aufnahmebereitschaft extern über den Framegrabber zu ermitteln und/oder zu setzen. Dies ist meist jedoch nur dann durchführbar, wenn sich die Parameter einer Aufnahmefolge nicht ändern. Vor allem bei elektronischen Kameras, die ohne Framegrabber auskommen und beispielsweise über einen Datenbus betrieben werden können, ist dies wegen der zu geringen Zeitauflösung der Datenverarbeitungsanlage und des Datenbusses meist nicht mehr möglich. Die maximale Aufnahmefolgefrequenz oder die schnellstmögliche Aufnahmebereitschaft kann insbesondere dann nicht mehr erreicht werden, wenn für Aufnahmen andere Parameter gesetzt werden müssen.

Für manche Anwendungsfälle ist es wünschenswert, eine möglichst schnelle zeitliche Folge der Aufnahmen zu erhalten, auch wenn sich die Parameter ändern sollten. Weiterhin kann es wünschenswert sein, die Kamera oder das Gerät möglichst schnell wieder bereit für die nächste Aufnahme zu schalten.

Der Erfindung liegt die Aufgabe zugrunde, eine Steuerung für ein derartiges elektronisches Gerät so auszubilden, daß eine maximierte Aufnahmefolgefrequenz oder eine frühestmögliche Aufnahmebereitschaft auch bei sich ändernder Parametrisierung während der Aufnahmefolge erzielt wird.

Die Aufgabe wird gemäß der Erfindung dadurch gelöst, daß die Berechnung des frühestmöglichen Auslösezeitpunktes für die Belichtung wenigstens einer nachfolgenden Aufnahme anhand eines geräteinternen Zeitsignals und/oder eines geräteinternen Zeittaktes und der Parameter im Gerät selbst erfolgt. Das Gerät bestimmt daher diesen Zeitpunkt selbst und ist nicht von den Impulsen oder Signalen eines Framegrabbers oder dergleichen abhängig. Auch ist offensichtlich, daß durch diese interne Berechnung ohne die ansonsten erforderliche Datenübertragung zu einem externen Rechner das Problem mit dessen Zeitauflösung nicht mehr auftritt. Demnach eignet sich die Kamera auch für einen Datenbus-Betrieb.

Es ist eine Logikeinheit vorgesehen, die anhand des Zeitsignals und der bekannten oder zu berechnenden Datentransferzeit für die Aufnahmedaten der gerade erfolgten Aufnahme sowie der Belichtungsdauer für die folgende Aufnahme den frühestmöglichen Auslösezeitpunkt ermittelt. Diese Berechnung des frühestmöglichen Auslosezeitpunktes erfolgt inbesondere unter der Berücksichtigung des verwendeten lichtempfindlichen Sensors. Der früheste Auslösezeitpunkt kann nach der Belichtung der vorhergehenden Aufnahme und noch vor dem Ende der Übertragung derer Aufnahmedaten zur Datenverarbeitungseinheit liegen.

Es kann bei einem Sensor mit Transferregister vorgesehen werden, daß der früheste Auslösezeitpunkt berechnet wird derart, daß das Ende der Belichtungsdauer der aktuellen Aufnahme mit dem Ende der Übertragung der Aufnahmedaten aus dem Transferregister der vorhergehenden Aufnahme zusammenfällt oder nach diesem liegt. Dies ist beispielsweise bei den typischen CCD-Sensor erforderlich, da hier gewährleistet werden muß, daß das Transferregister unmittelbar nach der Belichtung frei und überschreibbar ist. Mit dieser Wahl des Auslösezeitpunktes wird eine Überbelichtung der zu tätigenden Aufnahme oder eine Überschreibung der Daten der vorhergehenden Aufnahme vermieden.

Das Gerät kann so konfiguriert sein, daß es zum frühestmöglichen Zeitpunkt selbst die Belichtung auslöst. Hier wird die maximale Aufnahmefolgefrequenz erreicht. Es ist selbstverständlich auch möglich, daß das Auslösen der Belichtung mit einer einstellbarer Verzögerung erfolgt oder in einer vorgebbaren Periode erfolgt, deren Periodenstart jeweils zu oder nach frühestmöglichen Zeitpunkt liegt. In jedem Fall kann die Kamera eine höhere Aufnahmefolgefrequenz erreichen.

Es kann aber auch vorgesehen werden, daß die Kamera zum oder nach dem frühestmöglichen Zeitpunkt durch ein Triggersignal auslösbar ist. Hier kann nach der Berechnung und nach Erreichen des frühestmöglichen Auslösezeitpunkt ein entsprechendes Signal gesetzt werden, daß die Kamera nunmehr bereit ist. Eventuell zu früh kommende Triggersignale können verzögert, ignoriert und/oder mit einer Fehlermeldung beantwortet werden.

Die Parametrisierung wird in der Regel einen veränderbaren Datensatz für die aktuelle Aufnahme umfassen, der in einem ersten Speicher abgelegt ist. Es ist zweckmäßig, wenn der Datensatz der Parametrisierung für die nachfolgende Aufnahme in einem zweiten Speicher abgelegt wird. Die ersten und zweiten Speicher können dann abwechselnd aufgerufen werden, oder als Schieberegister ausgebildet sein, wobei der Datensatz für die neue Parametrisierung in dem Speicher abgelegt wird, der nicht die Parameter für die aktuelle Aufnahme enthält.

Das Setzen der Parameter einschließlich der Berechnung der Belichtungsdauer und/oder des frühestmöglichen Auslösezeitpunktes für die nachfolgende Aufnahme kann durch die Steuerung während und/oder nach der Übertragung der aktuellen Aufnahmedaten oder sogar nach dem Auslösen der Belichtung für die aktuelle Aufnahme erfolgen. Es hat sich gezeigt, daß die Datenübertragung häufig die längste Zeit benötigt, während die Parametrisierung und die Berechnung des frühestmöglichen Zeitpunktes deutlich kürzer dauern. Letztlich führt dies dazu, daß die maximale Aufnahmefolgefrequenz durch die Zeit der Datenübertragung aus dem Transferregister maßgeblich bestimmt wird. Wenn zudem die Belichtungsdauer kürzer ist als die Datentransferzeit kann im optimalen Fall die insgesamt für eine Aufnahme benötigte Zeit demnach nur noch diese Datentransferzeit betragen.

In jedem Fall ist es günstig, wenn die Berechnung zumindest des frühestmöglichen Auslösezeitpunktes erst nach einem Startsignal erfolgt, das nach dem Vervollständigen der Parametrisierung für die folgende Aufnahme erzeugt oder gesetzt wird. Dies hat den Vorteil, daß eine falsche und insbesondere die Berechnung eines zu früh liegenden Auslösezeitpunktes vermieden wird. Das Startsignal kann ein externes Signal oder ein time-out-Signal sein oder nach dem Eingeben eines vorgebbaren Parameters, insbesondere der Belichtungsdauer, erfolgen. Erst wenn die Belichtungsdauer für die nächste Aufnahme ermittelt ist, kann eine Berechnung des frühestmöglichen Auslösezeitpunktes sinnvoll durchgeführt werden. Sofern dies erst nach der Datenübertragung aus dem Transferregister feststeht, braucht eine Berechnung nicht mehr durchgeführt zu werden, da die Kamera dann in der Regel ohnehin bereit für eine Aufnahme ist.

Das elektronische Gerät gemäß der Erfindung ist mit wenigstens einem lichtempfindlichen Sensor zum Empfangen von elektromagnetischen Wellen, insbesondere Licht, ausgerüstet und ist für eine Belichtung einer Aufnahme parametriesierbar. Es ist eine interne Logikeinheit vorgesehen, die eine Steuerung umfaßt, die anhand eines geräteinternen Zeitsignals und/oder eines geräteinternen Zeittaktes und der Parameter den frühestmöglichen Auslösezeitpunkt für die Belichtung wenigstens einer nachfolgenden Aufnahme errechnet. Es können wenigstens ein erster und wenigstens ein zweiter Speicher für die Parameter vorhanden sein, in welchem ersten Speicher die Parameter für die momentane Aufnahme und in welchem zweiten Speicher die Parameter für die darauffolgende Aufnahme ablegbar sind. Dadurch ist eine Berechnung der Parametrisierung während der laufenden Aufnahme möglich.

Insbesondere handelt es sich bei dem Gerät um eine elektronische Kamera für industrielle Bildverarbeitungssysteme. Der Sensor kann beispielsweise ein CCD (Charged Coupled Device), (CMOS Complementary Metall Oxyde Semiconductor), CID, PMD (Photon Mixer Device), TFA (Thin Film on ASIC) sein, oder wenigstens eine Photodiode oder einen Phototransistor umfassen. Weiterhin kann der Sensor flächig für eine Matrixkamera oder linienförmig für eine Zeilenkamera ausgebildet sein. Ferner kann der Sensor für alle Arten von elektromagnetischen Wellen empfindlich sein, insbesondere sichtbares Licht oder unsichtbares Licht, wie IR-Licht oder UV-Licht, sowie Röntgenstrahlung.

Die Erfindung wird im folgenden anhand der schematischen Zeichnung näher erläutert. Es zeigen:
- Fig. 1: den Zeitablauf der einzelnen Schritte einer Aufnahmefolgefrequenz gemäß dem Stand der Technik,
- Fig. 2: den Zeitablauf der einzelnen Schritte einer Aufnahmefolgefrequenz gemäß der Erfindung und
- Fig. 3: ein Blockschaltbild einer Kamera gemäß der Erfindung.

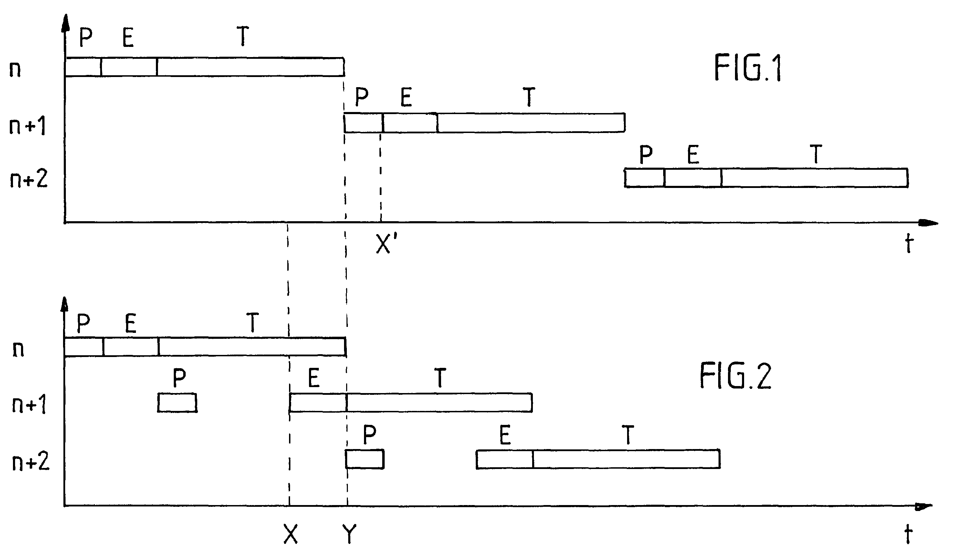

In Fig. 1 ist die zeitliche Folge der einzelnen Schritte einer Aufnahmefolgefrequenz für drei Aufnahmen dargestellt, die beispielsweise bei einer Bildaufnahme mit einer elektronischen Kamera durchgeführt werden. Für jede Aufnahme ist eine Parametrisierung P der Kamera erforderlich. Diese Parametrisierung umfaßt die Einstellungen der Kamera und des Sensors sowie der folgenden Datenübertragung, beispielsweise der Festlegung der Area of Interest, des Binning-Modus, der Belichtungsdauer und dergleichen.

Nach der Parametrisierung steht die Belichtungsdauer E fest, und die Kamera kann ausgelöst werden. Unmittelbar nach der Belichtung werden die erzeugten Aufnahmedaten des Sensors, beispielsweise des CCD-Sensors, in ein Transferregister geschoben. Aus diesem Transferregister erfolgt eine Übertragung der Bilddaten beispielsweise zu einem Framegrabber einer Datenverarbeitungsanlage. Hierfür wird häufig die längste Zeit T benötigt.

Die Belichtungsdauer E kann beispielsweise 25 ms sein. Die Zeit T für die Datenübertragung soll 50 ms betragen. Die Zeit für die Parametrisierung ist in der Regel kürzer und dauert zum Beispiel 5 ms. Wie aus Fig. 1 ersichtlich, werden bei herkömmlichen Systemen diese Schritte nacheinander ausgeführt, so daß die kürzeste Zeit einer Aufnahme der Summe der drei Zeitabschnitte für die Schritte P, E und T entspricht. Es kann daher alle 80 ms eine Bildaufnahme erfolgen.

Insbesondere die Eigenschaften eines lichtempfindlichen Sensors erlauben jedoch auch eine höhere Aufnahmefolgefrequenz, da es beispielsweise möglich ist, eine neue Belichtung bereits dann durchzuführen, wenn die Aufnahmedaten noch übertragen werden und sich beispielsweise noch im Transferregister befinden. Es ist durchaus möglich, die Parametrisierung und auch die Berechnung der Belichtungsdauer und damit des frühestmöglichen Auslösezeitpunktes für die folgende Aufnahme bereits während der Datenübertragung aus dem Transferregister durchzuführen. Allerdings ist dies bei herkömmlichen System mit Framgrabbern oder aber mit Bus-Systemen nur bedingt oder gar nicht möglich, da deren zeitliche Auflösung einer derartig zeitnahen Berechnung entgegensteht. Die Zeitauflösung eines PC's beträgt etwa 10 ms, während die eines Datenbusses etwa 125 µs beträgt. Es ist offensichtlich, daß eine externe Berechnung des frühestmöglichen Auslösezeitpunktes der Kamera damit nicht möglich ist.

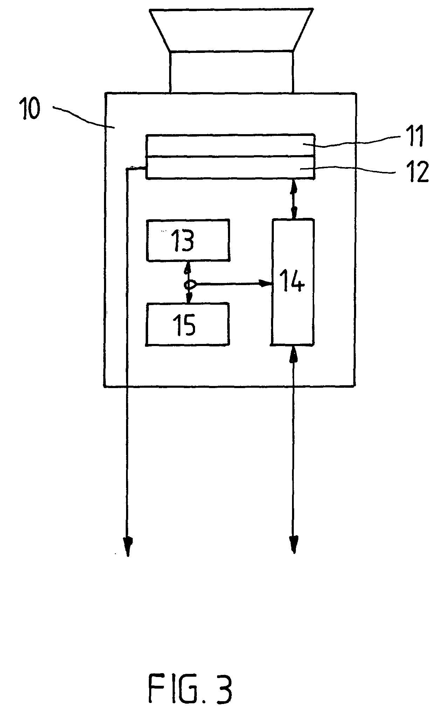

Fig. 3 zeigt eine Kamera 10, die mit einem lichtempfindlichen Sensor 11 ausgerüstet ist, der mit einem Transferregister 12 verbunden ist. Es ist ein erster Speicher 13 vorhanden, der die Parameter (Area of Interest, Binning-Modus, Belichtungsdauer und dergleichen) für die Aufnahme enthält und mit dem Sensor 11 in Verbindung steht. Die Kamera 10 weist weiterhin eine Logikeinheit 14 auf, die ein kamerainternes Zeitsignal oder einen kamerainternen Zeittakt erfaßt. Die Logikeinheit steht in Verbindung mit dem Sensor und dem ersten Speicher 13. Es ist ferner ein zweiter Speicher 15 vorgesehen, in dem die Parameter und insbesondere die Belichtungsdauer für die folgende Aufnahme abgelegt werden können. Die Logikeinheit 14 steht zudem in Verbindung mit der nicht gezeigten Datenverarbeitungsanlage, entweder über einen Datenbus und/oder einen Framegrabber. Ferner steht das Transferregister 12 in Verbindung mit der Datenverarbeitungsanlage.

Nach dem Setzen der Parameter für eine Aufnahme steht die Datenmenge, die zu übertragen ist, fest. Demnach kann auch die benötigte Zeit für die Datenübertragung aus dem Transferregister zur Datenverarbeitungsanlage in der Logikeinheit errechnet werden. Sofern es sich um einen CCD-Sensor handelt, steht somit auch der Zeitpunkt fest, zu dem die Belichtung des nächsten Bildes frühestens beendet sein darf, nämlich das Ende der Übertragung der Daten der aktuellen Aufnahme. Während dieser Datenübertragung können die Parameter für die folgende Aufnahme berechnet und gesetzt werden. Es steht die Belichtungsdauer E für die folgende Bildaufnahme fest, so daß durch Differenzbildung der frühestmögliche Auslösezeitpunkt X berechnet werden kann. Die zeitliche Berechnung und/oder das zeitliche Setzen der erforderlichen Steuersignale kann anhand von internen Zeittakten oder Zeitsignalen der Kamera oder des betreffenden Gerätes erfolgen. Auch können sogenannte Downcounter vorgesehen werden, die zum Auslösen des betreffenden Ereignisses entsprechend vorher gestartet werden.

Dadurch ist es möglich, die Zeit für eine Aufnahme deutlich zu reduzieren. Dies ist in Fig. 2 für einen CCD-Sensor schematisch dargestellt. Während der Übertragung T der Daten des n-ten Bildes aus dem Transferregister kann bereits die Parametrisierung für das (n+1)te Bild durchgeführt werden. In der Zeichnung beginnt die Parametrisierung unmittelbar nach der Belichtung. Die Parametrisierung kann aber auch vorher oder später beginnen. Der früheste Auslösezeitpunkt X wird durch die Logikeinheit mittels des durch die Parameter der n-ten Aufnahme bekannten Endes Y der Übertragungszeit T und anhand der gesetzten Belichtungsdauer der (n+1) ten Aufnahme ermittelt. Die Auslösung der Belichtung kann dann auch zu einer Zeit erfolgen, in der sich noch Daten im Transferregister befinden. Bei dem obengenannten Beispiel mit einer Belichtungsdauer von 25 ms, einer Parametrisierungsdauer von 5 ms und einer Datentransferzeit T von 50 ms kann bereits alle 50 ms eine Bildaufnahme erfolgen. Dies entspricht der insgesamt benötigten Transferzeit T, und eine vorherige Belichtung ist in den meisten Fällen ohnehin nicht möglich.

Bei einer freilaufenden Kamera kann die nächste Aufnahme n+1 demnach bereits zu dem Zeitpunkt X erfolgen, der deutlich früher liegt, als der Auslösezeitpunkt X' in Fig. 1. Bei einer getriggerten Kamera kann diese zum Zeitpunkt X ein entsprechendes Signal setzen, daß die Aufnahme erfolgen kann. Wie aus dem Vergleich der Fig. 1 und 2 ersichtlich, kann mit einer derartigen Steuerung einer elektronischen Kamera eine wesentlich höhere Aufnahmefrequenz erzielt werden.

## Patentansprüche

1. Steuerung für ein elektronisches Gerät zum Empfang elektromagnetischer Wellen, insbesondere von Licht, das wenigstens einen lichtempfindlichen Sensor aufweist und aufgrund einer Belichtung Aufnahmedaten erzeugt sowie für wenigstens eine Aufnahme parametrisierbar ist, wobei die Aufnahmedaten nach der Belichtung an wenigstens eine Datenverarbeitungseinheit übertragbar sind, **dadurch gekennzeichnet, daß** die Berechnung des frühestmöglichen Auslösezeitpunkts (X) für die Belichtung (E) wenigstens einer nachfolgenden Aufnahme anhand eines geräteinternen Zeitsignals und/oder eines geräteinternen Zeittaktes und der Parameter im Gerät selbst erfolgt.

2. Steuerung nach Anspruch 1, **dadurch gekennzeichnet, daß** der früheste Auslösezeitpunkt nach der Belichtungsdauer der vorhergehenden Aufnahme und vor dem Ende der Übertragung derer Aufnahmedaten liegt.

3. Steuerung nach Anspruch 1, **dadurch gekennzeichnet, daß** der bei einem Sensor mit Transferregister der früheste Auslösezeitpunkt (X) für die folgende Aufnahme berechnet wird derart, daß das Ende der Belichtungsdauer (E) für die folgenden Aufnahme mit dem Ende (Y) der Übertragung (T) der Aufnahmedaten aus dem Transferregister der aktuellen Aufnahme zusammenfällt oder nach diesem liegt.

4. Steuerung nach einem der Ansprüche 1 bis 3, **dadurch gekennzeichnet, daß** das Gerät zum frühestmöglichen Zeitpunkt (X) die Belichtung selbst auslöst.

5. Steuerung nach Anspruch 4, **dadurch gekennzeichnet, daß** das Auslösen der Belichtung mit einer einstellbarer Verzögerung erfolgt oder in einer vorgebbaren Periode erfolgt, deren Periodenstart jeweils zu oder nach dem frühestmöglichen Zeitpunkt (X) liegt.

6. Steuerung nach einem der Ansprüche 1 bis 3, **dadurch gekennzeichnet, daß** die Belichtung des Gerätes zum oder nach dem frühestmöglichen Auslösezeitpunkt (X) durch ein Triggersignal auslösbar ist, wobei ein vor dem frühestmöglichen Auslösezeitpunkt liegendes Triggersignal gehalten wird, um die Belichtung frühestmöglich auszulösen, oder verworfen wird.

7. Steuerung nach einem der Ansprüche 1 bis 6, **dadurch gekennzeichnet, daß** wenigstens ein Datensatz für die Parameter für die aktuelle Aufnahme in einem ersten Speicher (13) abgelegt ist.

8. Steuerung nach einem der Ansprüche 1 bis 7, **dadurch gekennzeichnet, daß** wenigstens ein Datensatz für die Parameter für die nachfolgende Aufnahme in einem zweiten Speicher (15) abgelegt ist.

9. Steuerung nach einem der Ansprüche 1 bis 8, **dadurch gekennzeichnet, daß** die Parametrisierung einschließlich der Berechnung der Belichtungsdauer oder des frühestmöglichen Auslösezeitpunktes für die nachfolgende Aufnahme zumindest vor dem Ende der Übertragung der aktuellen Aufnahmedaten beginnt und/oder abgeschlossen ist.

10. Steuerung nach einem der Ansprüche 1 bis 9, **dadurch gekennzeichnet, daß** die Berechnung zumindest des frühestmöglichen Auslösezeitpunktes erst nach einem Startsignal erfolgt, das nach dem Vervollständigen der Parametrisierung für die folgende Aufnahme erzeugt oder gesetzt wird.

11. Steuerung nach Anspruch 10, **dadurch gekennzeichnet, daß** das Startsignal ein externes Signal oder ein time-out-Signal ist oder nach dem Eingeben eines vorgebbaren Parameters, insbesondere der Belichtungsdauer, erfolgt.

12. Elektronisches Gerät mit wenigstens einem lichtempfindlichen Sensor (11) zum Empfangen von elektromagnetischen Wellen, insbesondere Licht, welches Gerät für eine Belichtung einer Aufnahme parametriesierbar ist und eine interne Logikeinheit (14) aufweist, **dadurch gekennzeichnet, daß** die interne Logikeinheit eine Steuerung umfaßt, die anhand eines geräteinternen Zeitsignals und/oder eines geräteinternen Zeittaktes und der Parameter den frühestmöglichen Auslösezeitpunkt (X) für die Belichtung (E) wenigstens einer nachfolgenden Aufnahme errechnet.

13. Elektronisches Gerät nach Anspruch 12, **dadurch gekennzeichnet, daß** wenigstens ein erster und wenigstens ein zweiter Speicher (13, 15) die Parameter vorhanden sind, in welchem ersten Speicher (13) der Datensatz für die Parameter für die momentane Aufnahme und in welchem zweiten Speicher (15) der Datensatz für die Parameter für die nachfolgende Aufnahme ablegbar sind.

14. Elektronisches Gerät nach Anspruch 12 oder 13 **dadurch gekennzeichnet, daß** es als Kamera ausgebildet ist.

15. Elektronisches Gerät nach einem der Ansprüche 12 bis 14, **dadurch gekennzeichnet, daß** der Sensor ein CCD, CMOS, CID, PMD oder TFA ist, oder wenigstens eine Photodiode oder einen Phototransistor umfaßt.
